## Europäisches Patentamt
## European Patent Office
## Office européen des brevets

(11) Publication number: **0 124 226**
**B1**

(12) **EUROPEAN PATENT SPECIFICATION**

(45) Date of publication of patent specification: **18.10.89**

(21) Application number: **84301725.2**

(22) Date of filing: **14.03.84**

(60) Divisional application 88113305 filed on 17.08.88.

(51) Int. Cl.⁴: **C 01 B 3/38**

(54) **Steam reforming.**

(30) Priority: **25.03.83 GB 8308343**
**17.06.83 GB 8316588**

(43) Date of publication of application:
**07.11.84 Bulletin 84/45**

(45) Publication of the grant of the patent:
**18.10.89 Bulletin 89/42**

(84) Designated Contracting States:
**DE FR GB IT NL SE**

(56) References cited:
**WO-A-80/01065**
**DE-A-3 100 641**
**FR-A-2 380 072**
**GB-A-2 057 908**
**GB-A-2 082 623**

(73) Proprietor: **IMPERIAL CHEMICAL INDUSTRIES PLC**
**Imperial Chemical House, Millbank**
**London SW1P 3JF (GB)**

(72) Inventor: **Pinto, Alwyn**
**18 Cambridge Road**
**Linthorpe Middlesbrough Cleveland (US)**
Inventor: **Twigg, Martyn Vincent**
**30 Valley Drive**
**Yarm Cleveland (US)**

(74) Representative: **Gratwick, Christopher et al**
**Imperial Chemical Industries PLC Legal**
**Department: Patents PO Box 6 Bessemer Road**
**Welwyn Garden City Herts, AL7 1HD (GB)**

Note: Within nine months from the publication of the mention of the grant of the European patent, any person may give notice to the European Patent Office of opposition to the European patent granted. Notice of opposition shall be filed in a written reasoned statement. It shall not be deemed to have been filed until the opposition fee has been paid. (Art. 99(1) European patent convention).

Courier Press, Leamington Spa, England.

# EP 0 124 226 B1

**Description**

This invention relates to reforming of a hydrocarbon feedstock with steam and/or carbon dioxide.

In EP—A—0021736 a process is described for producing a gas containing hydrogen which comprises reacting in the gaseous phase a hydrocarbon or hydrocarbon derivative with steam and/or carbon dioxide, in the presence of a catalyst with a catalyst outlet temperature such that the product gas contains at least 30% v/v of hydrogen on a dry basis, in which the catalyst units comprise a support and at least one active metal selected from the group consisting of nickel, cobalt and platinum group metals, characterised in that the catalyst support comprises a primary support made of a metal or alloy resistant to the conditions in which the reaction is carried out and a secondary support which is a layer of a refractory oxidic material adhering to the surface of the metal or alloy.

We have now realised that the use of the catalyst supported on the metal or alloy makes possible a new design of reforming apparatus and a new process sequence, which apparatus and sequence conveniently, but not necessarily, include the said catalyst.

According to the invention there is provided a process for the production of a raw hydrogen containing gas stream comprising:

i)   reacting a mixture of a hydrocarbon feedstock and steam and/or carbon dioxide in a first zone containing a steam reforming catalyst to produce a primary reformed gas stream containing hydrogen, carbon oxides, methane and unreacted steam;

ii)  partially combusting said primary reformed gas stream with oxygen, air, or oxygen-enriched air, so as to provide a hot, partially combusted, gas stream;

iii) reacting said hot, partially combusted, gas stream in a second zone containing a secondary steam reforming catalyst so as to decrease the methane content of said gas stream to form a product gas stream; and

iv)  simultaneously transferring heat from said primary reformed gas stream leaving said first zone, and from said product gas stream leaving said second zone, to said mixture while said mixture is in said first zone, so as to supply the heat required for the endothermic reaction in said first zone, and to provide a cooled primary reformed gas stream and a cooled product stream.

For such processes the hydrocarbon feedstock preferably has a boiling point not over 220°C and is most conveniently normally gaseous, especially with a hydrogen to carbon atomic ratio of at least 3.5. If a hydrocarbon derivative is used as the feedstock, it is most conveniently methanol or ethanol.

In the process of the invention part of the heat required for the endothermic primary reforming is supplied from a catalytic "secondary reformer" in which the primary reformed gas from the endothermic primary reforming is reacted with oxygen to decrease its methane content. Such a secondary reforming step can be carried out in a separate vessel; but very suitably the heat exchange zone contains, upstream of the tube, a bed for a secondary reforming catalyst and, upstream of that bed and spaced from it so as to avoid damage to the catalyst, a secondary reformer burner in which primary reformer gas and oxygen, possibly as air or enriched air, are brought together and reacted in a flame.

For the production of raw hydrogen, or raw synthesis gas for conversion to organic compounds, an oxygen-rich gas (over 80, especially over 95% v/v) is used for effecting the partial combustion. By the use of air, or enriched air, for effecting the partial combustion, raw ammonia synthesis gas can be produced.

In any such processes there follows steps of cooling and removal of excess steam as liquid water. When the product is to be ammonia synthesis gas or hydrogen-rich gas, the raw gas is subjected also to shift, carbon dioxide removal, and fine purification from traces of carbon oxides.

By using non-enriched air for effecting the partial combustion, there can be produced a raw ammonia synthesis gas containing an excess of nitrogen, ie having, after shift and carbon dioxide removal, a hydrogen to nitrogen ratio lower than stoichiometric: to use such a gas in ammonia synthesis there will be included a subsequent step of nitrogen removal from the reacted synthesis gas as in the process of EP—B—000993, or before the gas enters ammonia synthesis. Further, by using moderately enriched air, the extent of nitrogen removal can be decreased, for example to zero when the hydrocarbon feedstock is methane and the oxygen percentage is about 35% v/v.

In a preferred form of the invention:

i)   the first zone comprises a plurality of annular zones extending into a heat exchange zone from a plenum zone, each annular zone:

a) is closed at the end remote from the plenum zone and opens at the other end into the plenum zone,

b) contains the steam reforming catalyst, and

c) surrounds a tube that is open at the closed end of the associated annular zone, and extends the length of the annular zone and through the plenum zone; said heat exchange zone being downstream of the second zone so that the product gas leaving the second zone passes through the heat exchange zone, whereby each annular zone is heated from the outside by the product gas stream passing through the heat exchange zone, and from the inside by the primary reformed gas stream leaving that annular zone through the tube associated therewith; and

ii)  the mixture of hydrocarbon and steam is fed to the plenum zone wherein, prior to said mixture entering said annular zones, it is heated by the primary reformed gas stream flowing through the tubes extending through said plenum zone.

2

A preferred form of apparatus for use in the invention comprises:

i) an outer shell;

ii) mutually parallel first and second tubeplates disposed across the shell and dividing it into three successive zones, namely a heat exchange zone, a reactants feed zone, and a products off-take zone;

iii) at least one outer tube extending into the heat exchange zone from the first tube plate bounding that zone, the outer tube extremity within that zone being closed;

iv) at least one inner tube extending from the second tube plate into each outer tube and having an open end adjacent the closed extremity of the outer tube, whereby each outer tube and its associated inner tube define an annular zone between the interior surface of the outer tube and the exterior surface of the inner tube;

v) a steam reforming catalyst in each annular zone;

vi) a burner provided with means to supply thereto:

    a) gas from said products off-take zone and

    b) oxygen, air, or oxygen-enriched air;

vii) a secondary reforming catalyst bed downstream of the burner; and

viii) means to pass gas from said secondary reforming catalyst bed to the heat exchange zone.

The exterior surface of the inner tube preferably carries an adherent layer of the primary reforming catalyst; alternatively it can carry catalyst units mechanically linked to it, or there can be structured or loose catalyst in the annular space.

Especially if the adherent catalyst is used, each of the outer tubes defining the exterior of the annular zone preferably has its closed end upwards, for these reasons:

    a) piping connections are facilitated;

    b) removal of the inner tube to permit catalyst replacement is facilitated; and

    c) the space between adjacent outer tubes can be packed, thus improving heat transfer.

The outer shell preferably withstands superatmospheric pressure, especially in the range 5—120, for example 25—80, bar abs.

To afford adequate geometric surface for the steam reforming catalyst, the outer tube defining the exterior of the annular zone can be of smaller diameter than has been common in steam reforming practice: up to 75 mm I.D., with an inner tube correspondingly small, leaving an annular space 5—20 mm wide, would be suitable. Possibly a larger outer tube, up to 150 mm I.D. can be used with a plurality of inner tubes. Preferably the inner tube has an extended surface, provided for example by fins or attached spikes or winding wires. The surface area is typically 3 to 10 times that of the smooth tube. A very suitable extended surface is provided by a multi (e.g. 6—10) start helix with in all 80 to 400 turns per m. The fins or helices can be continuous or interrupted.

The inner tube can contain a turbulator, to improve heat exchange between product gas and the reactants in the annular space. Neither the inner surface of the inner tube nor the turbulator should carry catalyst, of course.

The catalyst layer can itself be a catalyst in virtue of the choice of material of construction or of chemical or physical modification of its surface for example by cold-rolling of a nickel-containing unit. More commonly it is a support for active material, for example one or more metals from Group VIII of the Periodic Table. Especially when the support has a very low adsorptive surface, for example when it is a metal or alloy, it (as "primary support") carries a coating of adsorptive material ("secondary support") and the active material is associated with that coating. Preferably the Group VIII metal content, if non-noble, is in the range 30—60% $\%_w$ calculated as equivalent NiO on the total coating. Such adsorptive material typically has a pore volume over 0.3 cm$^3$ g$^{-1}$ and a surface area of at least 1.0, preferably over 15, especially in the range 50—200 m$^2$g$^{-1}$. The secondary support preferably has a thickness in the range 0.01 to 0.3, especially 0.02 to 0.1mm.

The secondary support typically comprises alumina, especially gamma or eta alumina. Other sesquioxides, for example, chromia and rare earth oxides may take up at least part of the secondary support. Other useful secondary support oxides are titania, zirconia, hafnia, thoria, vanadia, urania, oxides of manganese, molybdenum and tungsten and combined oxides.

Preferably the secondary support includes a grain growth inhibitor, for example at least 0.05, especially 0.1 to 5.0% by weight of yttrium or of one or more rare earth oxides, especially of cerium, or praseodymium.

When nickel and/or cobalt are present in the catalyst, it is expected that the secondary support, if it contains a sesquioxide, will include, at least after a period of process operation, some nickel and/or cobalt spinel. It is within the invention to have the secondary support material at least partly in the form of spinel, whether of nickel and/or cobalt or of a divalent metal having a difficulty reducible oxide, especially magnesium or manganese or, less preferably, zinc. Since nickel and/or cobalt present as spinel is in a reduction-resistant oxidic form, it does not contribute significantly to the activity of the catalyst: active nickel and/or cobalt are additional thereto.

In a catalyst comprising nickel and/or cobalt there may also be present one or more platinum group metals, which are capable of increasing the activity of the nickel and/or cobalt and of decreasing the tendency to carbon lay-down when reacting hydrocarbons higher than methane. The concentration of such platinum group metal is typically in the range 0.005 to 1% as metal, calculated on the coating. Further, the

3

catalyst, especially in preferred forms, can contain a platinum group metal but no non-noble catalyst component. Such a catalyst is more suitable than one on a conventional support because a greater fraction of the active metal is accessible to the reacting gas. A typical content of platinum group metal when used alone is in the range 0.005 to 5% $\%_w$ as metal, calculated on the coating.

The specific surface of the catalytic metal is suitably in the range 1 to 500 m²/g of coating. Within these ranges the larger areas are preferred for reactions under 600°C.

When both non-noble and noble metals are present a useful level of catalytic activity can be obtained using a notably small concentration of such metals, namely under 2%, especially 0.01 to 0.5, % $\%_w$ in all, calculated on the total of secondary support and such metals. The preferred noble metal is rhodium.

The catalyst can be made by applying a compound of the active metal and the secondary support together in the primary support. In a preferred method the secondary support is applied to the primary support, the combination is preferably calcined, and then a solution containing a thermally decomposable compound of active metal is applied. When it is desired to regenerate the catalyst, the inner tubes can be withdrawn and re-treated with a compound of the active metal.

As an alternative to the use of the primary reforming catalyst as a layer adherent to the inner tube, the catalyst may be in the form of units removable from the space between the inner and outer tubes. Such units may be tubular units having perforated walls and means to distance those walls from the walls of the annular zone in which they are stacked in axial relationship with one another and with the annular zone.

Each unit may be made of highly calcined ceramic or of metal or alloy and carries a layer of catalyst as already described. If desired, any spacers used can also be coated with such catalyst.

The reaction of a hydrocarbon with steam and/or carbon dioxide to produce a gas containing at least 30% v/v of hydrogen on a dry basis is typically operated at 550—1000°C and at 1—60 bar abs pressure. In such a process in accordance with the invention using a primary reforming catalyst in the form of such units, the geometric surface of the catalyst is well below the level of about 300 m⁻¹ common when using conventional ceramic ring catalyst, and is, for example, in the range 40—200 m⁻¹: the pressure drop can be under 10%, for example 0.1 to 2.0%, of that of such rings. Catalyst units that may be used are, for example, 40—160 mm in diameter excluding external projections or spacers.

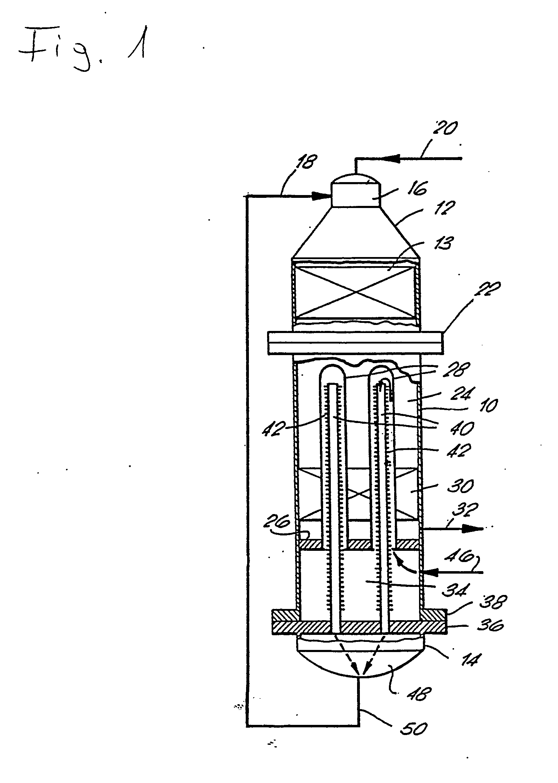

The invention is illustrated by the accompanying drawing which shows in diagrammatic vertical section a preferred form of apparatus.

In the drawing, the outer shell consists of cylindrical centre portion 10, upper portion 12, and lower portion 14. Upper portion 12 is formed with a mixing and burner zone 16 to which is connected a gas inlet 18 and an air inlet 20 and is joined by bolted flange 22 to cylindrical centre portion 10. The upper portion 12 also contains a secondary reforming catalyst bed 13.

Centre portion 10 is divided horizontally by tube plate 26, the space above which constitutes the heat exchange zone 24 in virtue of the "outer" heat exchange tubes 28 extending upwards from the tube plate with closed upper ends. Zone 24 includes a packed region 30 to improve heat exchange between hot gases outside and reactants inside tubes 28 and an outlet 32 for cooled secondary reformer outlet gas.

Beneath tube plate 26 is reactants feed zone 34 bounded by tube plate 36 which extends outwards to form a flange bolted to flange 38. Tubes 40 each have an extended, catalyst-coated surface 42, and extend upwards from tube plate 36 almost to the closed end of tubes 28. The inside surface of tubes 28 may or may not have a catalyst coating.

Beneath tube plate 36 is product off-take zone 48 from which outlet 50 leads to gas inlet 18.

Vessel 10 is preferably provided with a jacket (not shown) through which cool air or water is circulating, to keep down the temperature of the pressure-resisting shell and maintain its internal refractory lining in compression.

In a process for producing raw hydrogen or a raw synthesis gas for conversion to organic compounds according to the process of the invention, a mixture of desulphurised natural gas and steam at for example 200—450°C is fed at 46 to reactants feed zone in which it is heated by heat exchange with the gas in tubes 40. If the hydrocarbon feedstock is hydrogen-rich, the feed at 46 may include carbon dioxide. It passes up the annular space in contact with catalyst 42 receiving heat both from inner tube 40 and from heat exchange zone 24, until at the top its temperature is for example 650—750°C. It then passes down inner tube 40 as a source of heat for incoming gas and leaves the bottom portion 14 of the shell by way of products offtake zone 48 and outlet 50. The methane content of the gas at 50 is preferably in the range 0.2—5% v/v on a dry basis. From 50 the gas flows through line 18 and enters mixer/burner zone 16, in which it reacts with oxygen or possibly enriched air fed in by line 20. The resulting heat evolution is sufficient to reform the methane present in the gas at 18 and to heat tubes 28. After cooling in heat exchange zone 24 aided by packing 30 the gas leaves by 32. Thereafter it is passed to further heat recoveries and to steps of shift, carbon dioxide removal and fine purification to give hydrogen, or to cooling and water removal to give synthesis gas.

The Table shows temperatures, pressures and gas compositions for the production of raw methanol synthesis gas with substantially pure oxygen fed at 20.

Table

| Position | Temp. °C | Press bar abs | Gas composition (% v/v) | | | | |
|---|---|---|---|---|---|---|---|
| | | | CO | CO$_2$ | H$_2$ | CH$_4$ | H$_2$O |
| 46 | 390 | 12 | – | – | 0.6 | 19.9 | 79.5 |
| 40 outlet | 790 | 11.5 | 6.2 | 6.2 | 43.9 | 2.5 | 41.2 |
| 50 | 580 | 11.2 | 6.2 | 6.2 | 43.9 | 2.5 | 41.2 |

By using non-enriched air for effecting the partial combustion there can be produced a raw ammonia synthesis gas containing an excess of nitrogen: to use such a gas in ammonia synthesis there will be included a subsequent step of nitrogen removal. Further, by feeding moderately enriched air, the extent of nitrogen removal can be decreased, for example to zero when the hydrocarbon feedstock is methane and the oxygen percentage is about 35% v/v.

**Claims**

1. A process for the production of a raw hydrogen containing gas stream comprising:

i) reacting a mixture of a hydrocarbon feedstock and steam and/or carbon dioxide in a first zone containing a steam reforming catalyst to produce a primary reformed gas stream containing hydrogen, carbon oxides, methane and unreacted steam;

ii) partially combusting said primary reformed gas stream with oxygen, air, or oxygen-enriched air, so as to provide a hot, partially combusted, gas stream;

iii) reacting said hot, partially combusted, gas stream in a second zone containing a secondary steam reforming catalyst so as to decrease the methane content of said gas stream to form a product gas stream; and

iv) simultaneously transferring heat from said primary reformed gas stream leaving said first zone, and from said product gas stream leaving said second zone, to said mixture while said mixture is in said first zone, so as to supply the heat required for the endothermic reaction in said first zone, and to provide a cooled primary reformed gas stream and a cooled product stream.

2. A process according to claim 1 wherein

i) the first zone comprises a plurality of annular zones extending into a heat exchange zone from a plenum zone, each annular zone:
a) is closed at the end remote from the plenum zone and opens at the other end into the plenum zone,
b) contains the steam reforming catalyst, and
c) surrounds a tube that is open at the closed end of the associated annular zone, and extends the length of the annular zone and through the plenum zone; said heat exchange zone being downstream of the second zone so that the product gas leaving the second zone passes through the heat exchange zone, whereby each annular zone is heated from the outside by the product gas stream passing through the heat exchange zone, and from the inside by the primary reformed gas stream leaving that annular zone through the tube associated therewith; and

ii) the mixture of hydrocarbon and steam is fed to the plenum zone wherein, prior to said mixture entering said annular zones, it is heated by the primary reformed gas stream flowing through the tubes extending through said plenum zone.

3. A process according to claim 2 wherein the primary reforming catalyst is present as a layer adherent to the exterior surface of the tube in the annular catalyst zone.

4. Apparatus for the production of a raw hydrogen containing stream comprising:

i) an outer shell;

ii) mutually parallel first and second tubeplates disposed across the shell and dividing it into three successive zones, namely a heat exchange zone, a reactants feed zone, and a products off-take zone;

iii) at least one outer tube extending into the heat exchange zone from the first tube plate bounding that zone, the outer tube extremity within that zone being closed;

iv) at least one inner tube extending from the second tube plate into each outer tube and having an open end adjacent the closed extremity of the outer tube, whereby each outer tube and its associated inner tube define an annular zone between the interior surface of the outer tube and the exterior surface of the inner tube;

v) a steam reforming catalyst in each annular zone;

5

vi    a burner provided with means to supply thereto:
    a) gas from said products off-take zone and
    b) oxygen, air, or oxygen-enriched air;
vii)  a secondary reforming catalyst bed downstream of the burner; and
viii) means to pass gas from said secondary reforming catalyst bed to the heat exchange zone.
    5. Apparatus according to claim 4 wherein the burner and secondary reforming catalyst bed are located in the heat exchange zone upstream of the outer tubes.

**Patentansprüche**

1. Verfahren zur Herstellung eines wasserstoffhaltigen Rohgasstromes, bei dem

i)    eine Mischung aus einem Kohlenwasserstoff-Ausgangsmaterial und Wasserdampf und/oder Kohlendioxid in einer ersten Zone, die einen Wasserdampfreformierungs-Katalysator enthält, zur Reaktion gebracht wird, um einen primärreformierten Gasstrom zu erzeugen, der Wasserstoff, Kohlenstoffoxide, Mehan und unumgesetzten Wasserdampf enthält,

ii)   der primärreformierte Gasstrom mit Sauerstoff, Luft oder sauerstoffangereicherter Luft partiell verbrannt wird, um einen heißen, partiell verbrannten Gasstrom bereitzustellen,

ii)   der heiße, partiell verbrannte Gasstrom in einer zweiten Zone, die einen Sekundärwasserdampfreformierungs-Katalysator enthält, zur Reaktion gebracht wird, um den Methangehalt des Gasstromes zur Bildung eines Produktgasstromes zu vermindern, und

iv)   auf die Mischung gleichzeitig, Wärme aus dem primärreformierten Gasstrom, der die erste Zone verläßt, und aus dem Produktgasstrom, der die zweite Zone verläßt, übertragen wird, während sich die Mischung in der ersten Zone befindet, um die Wärme zuzuführen, die für die endotherme Reaktion in der ersten Zone benötigt wird, und um einen gekühlgen primärreformierten Gasstrom und einen gekühlten Produktgasstrom bereitzustellen.

2. Verfahren nach Anspruch 1, bei dem

i)    die erste Zone mehr als eine ringförmige Zone enthält, die sich aus einer Überdruckzone in eine Wärmeaustauschzone erstrecket, wobei jede ringförmige Zone
    a) an dem Ende, das von der Übedruckzone entfernt ist, gescholssen ist und sich an dem anderen Ende in die Überdruckzone öffnet,
    b) den Wasserdampfreformierungs-Katalysator enthält und
    c) ein Rohr umgibt, das bei dem gescholssenen Ende der zugehörigen ringförmigen Zone offen ist und sich längs der ringförmigen Zone und durch die Überdruckzone hindurch erstreckt,
    wobei sich die Wärmeaustrauschzone bezüglich der zweiten Zone stromabwärts befindet, so daß das Produktgas, das die zweite Zone verläßt, durch die Wärmeaustauschzone hindurchströmt, wodurch jede ringförmige Zone von außen durch den Produktgasstrom, der durch die Wärmeaustauschzone hindurchströmt, und von innen durch den primärreformierten Gasstrom, der diese ringförmige Zone durch das dazugehörende Rohr verläßt, erhitzt wird, und

ii)   die Mischung aus Kohlenwasserstoff und Wasserdampf der Überdruckzone zugeführt wird, in der die Mischung durch den primärreformierten Gasstrom, der durch die Rohre, die sich durch die Überdruckzone hindurch erstrecken, hindurchströmt, erhitzt wird, bevor sie in die ringförmigen Zonen eintritt.

3. Verfahren nach Anspruch 2, bei dem der Primärreformierungs-Katalysator als eine Schicht vorhanden ist, die an der Außenfläche des in der ringförmigen Katalysatorzone befindlichen Rohres anhaftet.

4. Vorrichtung zur Herstellung eines wasserstoffhaltigen Rohgasstromes mit

i)    einer Außenhülle,

ii)   einem ersten und einem zweiten Rohrboden, die quer zu der Außenhülle parallel zueinander angeordnet sind und die Außenhülle in drei aufeinanderfolgende Zonen, und zwar eine Wärmeaustauschzone, eine Reaktionsteilnehmer-Zuführungszone und eine Produkt-Austrittszone, einteilen,

iii)  wenigstens einem Außenrohr, das sich von dem ersten Rohrboden, der die Wärmeaustauschzone begrenzt, in die Wärmeaustauschzone erstreckt, wobie das in der Wärmeaustauschzone befindliche Ende des Außenrohrs geschlossen ist,

iv)   wenigstens einem Innenrohr, das sich von dem zweiten Rohrboden in jedes Außenrohr erstrecket und ein offenes Ende hat, das dem geschlossenen Ende des Außenrohrs benachbart ist, wodurch jedes Außenrohr und sien zughöriges Innenrohr zwischen der Innenfläche des Außenrohrs und der Außenfläche des Innenrohrs eine ringförmige Zone abgrenzen,

v)    einem Wasserdampfreformierungs-Katalysator, der sich in jeder ringförmigen Zone befindet,

vi)   einem Brenner, der mit Einrichtungen versehen ist, die dazu dienen, dem Brenner
    a) Gas aus der Produkt-Austrittszone und
    b) Sauerstoff, Luft oder sauerstoffangereicherte Luft zuzuführen,

vii)  einem Sekundärreformierungs-Katalysatorbett, das sich bezüglich des Brenners stromabwärts befindet, und

viii) einer Einrichtung für die Zuführung von Gas aus dem Sekundärreformierungs-Katalysatorbett zu der Wärmeaustauschzone. -

5. Vorrichtung nach Anspruch 4, bei der der Brenner und das Sekundärreformierungs-Katalysatorbett stromaufwärts bezüglich der Außenrohre in der Wärmeaustauschzone angeordnet sind.

**Revendications**

1. Procédé pour la production d'un courant de gaz contenant de l'hydrogène brut, caractérisé en ce qu'il comprend:

i) la réaction d'un mélange d'une charge d'alimentation hydrocarbonée et de vapeur et/ou de dioxyde de carbone dans une première zone contenant un catalyseur de reformage à la vapeur pour produire un courant de gaz reformé primaire contenant de l'hydrogène, des oxydes de carbone, de méthane et de la vapeur n'ayant pas réagi;

ii) la combustion partielle de ce courant de gaz reformé primaire avec de l'oxygène, de l'air our de l'air enrichi en oxygène pour fournir un courant de gaz chaud ayant subi une combustion partielle;

iii) la réaction de ce courant de gaz chaud ayant subi une combustion partielle dans une seconde zone contenant un catalyseur de reformage à la vapeur secondaire afin de réduire la teneur en méthane de ce courant gazeux pour fournir un courant gazeux de produits; et

iv) le transfert de chaleur simultané de ce courant de gaz reformé primaire quittant la première zone et de ce courant de gaz de produits quittant la seconde zone, dans le mélange alors que celui-ci est dans la première zone, de façon à fournir la chaleur requise pour la réaction endothermique dans cette première zone et à fournir un courant de gaz reformé primaire refroidi et un courant de produits refroidi.

2. Procédé suivant la revendication 1, caractérisé en ce que:

i) la première zone comprend un grand nombre de zones annulaires se prolongeant dans une zone d'échange de chaleur depuis une zone positive, chaque zone annulaire:
a) est fermée l'extrémité éloignée de la zone positive et s'ouvre à l'autre extrémité dans la zone positive,
b) contient le catalyseur de reformage à la vapeur, et
c) entoure un tube qui est ouvert à l'extrémité fermée de la zone annulaire associée, et se prolonge le long de la zone annulaire et à travers la zone positive; cette zone d'échange de chaleur étant en aval de la seconde zone, de telle sorte que le gaz de produits quittant la seconde zone traverse la zone d'échange de chaleur si bien que chaque zone annulaire est chauffée de l'extérieur par le courant de gaz de produits traversant la zone d'échange de chaleur et de l'intérieur par le courant de gaz reformé primaire quittant cette zone annulaire à travers le tube qui lui est associé; et

ii) le mélange d'hydrocarbure et de vapeur est introduit dans la zone positive dans laquelle, avant l'entrée de ce mélange dans ces zones annulaires, il est chauffé par le courant de gaz reformé primaire s'écoulant à travers les tubes se prolongeant à travers cette zone positive.

3. Procédé suivant la revendication 2, caractérisé en ce que le catalyseur de reformage primaire est présent en tant qu'une couche adhérente à la surface extérieure du tube dans la zone de catalyseur annulaire.

4. Appareil pour la production d'un courant contenant de l'hydrogène brut, caractérise en ce qu'il comprend:

i) une enveloppe extérieure;

ii) des première et seconde plaques à tubes mutuellement parallèles disposées à travers l'enveloppe et la divisant en trois zones successives, à savoir une zone d'échange de chaleur, une zone d'alimentation des réactifs et une zone d'évacuation des produits;

iii) au moins un tube extérieur se prolongeant dans la zone d'échange thermique depuis la première plaque à tubes délimitant cette zone, l'extrémité du tube extérieur situé à l'intérieur de cette zone étant fermée;

iv) au moins un tube intérieur se prolongeant de la seconde plaque à tubes dans chaque tube extérieur et ayant une extrémité ouverte adjacente à l'extrémité fermée du tube extérieur, si bien que chaque tube extérieur et son tube intérieur associé définissent une zone annulaire entre la surface intérieure du tube extérieur et la surface extérieure du tube intérieur;

v) un catalyseur de reformage à la vapeur dans chaque zone annulaire;

vi) un brûleur pourvu de moyens pour fournir:
a) un gaz provenant de la zone de soutirage des produits; et
b) l'oxygène, l'air ou l'air enrichi en oxygène;

vii) un lit de catalyseur de reformage secondaire en aval du brûleur; et

viii) des moyens pour envoyer du gaz provenant de ce lit de catalyseur de reformage secondaire à la zone de'échange de chaleur.

5. Appareil suivant la revendication 4, caractérisé en ce que le brûleur et le lit de catalyseur de reformage secondaire sont situés dans la zone d'échange de chaleur en avant des tubes extérieurs.

Fig. 1